(19) **Europäisches Patentamt European Patent Office Office européen des brevets**

(11) **EP 3 641 041 B1**

(12) **EUROPEAN PATENT SPECIFICATION**

(45) Date of publication and mention
of the grant of the patent:
**04.06.2025 Bulletin 2025/23**

(51) International Patent Classification (IPC):
*H01M 8/18* (2006.01)   *H01M 4/86* (2006.01)
*H01M 4/90* (2006.01)

(21) Application number: **18290121.5**

(52) Cooperative Patent Classification (CPC):
**H01M 8/18; H01M 4/86; H01M 4/90;** Y02E 60/50

(22) Date of filing: **16.10.2018**

(54) **CARBON ELECTRODE FOR DICHROMATE REDOX FLOW BATTERIES**

KOHLENSTOFFELEKTRODE FÜR DICHROMAT-REDOX-FLUSSBATTERIEN

ÉLECTRODE DE CARBONE POUR DES BATTERIES À FLUX REDOX BICHROMATE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.04.2020 Bulletin 2020/17**

(73) Proprietor: **BROTHER GROUP (HONG KONG)
LIMITED
HONG KONG (CN)**

(72) Inventors:
 • **Finkelstein, David Alan
  38000 Grenoble (FR)**

 • **Bonin, Pierre
  26210 Lapeyrouse Mornay (FR)**
 • **Chatenet, Marian
  38250 Meylan (FR)**

(74) Representative: **Dr. Gassner & Partner mbB
Wetterkreuz 3
91058 Erlangen (DE)**

(56) References cited:
  **WO-A1-2016/168459   WO-A1-2017/004705
  US-A1- 2004 202 925**

EP 3 641 041 B1

**Description**

FIELD OF THE INVENTION

The invention relates to carbon electrodes for redox flow battery systems using an $Cr^{III}/Cr^{VI}$ redox couple in combination with a $Ce^{4+}/Ce^{3+}$ redox couple in the positive half-cell, a method for their operation and a method for using such redox flow batteries for electricity storage.

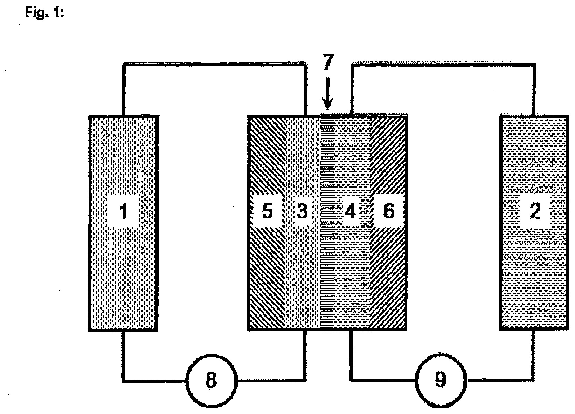

Redox flow batteries (RFB) are secondary (rechargeable) fuel cells and battery - fuel cell hybrids (Fig.1). Unlike traditional batteries, RFBs decouple system energy and power, and so like afuel cell have a total system energy that scales with the size of electroactive material storage tanks and a system power that scales with the size of the electrochemical reactor. This trait makes them ideal for storing large amounts of electricity at low cost, since additional electroactive material is usually far less expensive than a larger reactor. For this reason, RFBs are currently used and being further developed as massive, grid-level electricity storage devices. This is especially valuable for intermittent renewable energy sources, which, in order to stabilize their output to current electrical grids, require a source of backup electricity when the given resources (wind, solar) becomes temporarily unavailable.

Many RFB chemistries have been developed, yet they universally use oxidants that undergo 1 or 2 e⁻ reductions (n = 1 or 2) and/or have low to moderate solubility ($C_{max}$), greatly limiting (1) their volumetric energy densities and (2) their power densities. This applies to $VO^{2+}$, $Ce^{4+}$, $Fe^{3+}$ (1 e⁻), $Br_2$ (2 e⁻ and $O_2$ (4 e⁻)), the oxidants in all-vanadium, $Zn/Ce^{4+}$, $Cr^{2+}/Fe^{3+}$, $H_2/Br_2$, and $H_2/O_2$ RFBs, respectively. While $O_2$ and $Br_2$ have high n, their values for $C_{max}$ are much smaller than those for the other species (0.001 and 0.2 M vs. > 1 M). The lower energy and power densities associated with RFBs result in very large battery sizes relative to competing technologies, such as lead-acid and Li-ion batteries. The sheer size of such batteries contributes to unwanted facilities, operational, and materials costs, as well as restrictions an battery siting.

With the aim to provide significantly higher energy and power density WO 2016/202950 developed a cathodic half-cell based on $Cr_2O_7^{2-}$. In order to overcome the problem that $Cr_2O_7^{2-}$'s reduction product, $Cr^{3+}$, cannot be readily oxidized (i.e. recharged) heterogeneously at known electrode catalysts and combined it with an electron mediator capable of homogeneously oxidizing $Cr^{III}$ to $Cr^{VI}$ using an $EC_{cal}$ mechanism in solution.

However, said half-cell's electrolyte contains $Cr_2O_7^{2-}$ as well as highly reactive electron mediator species (such as $Ce^{4+}$) at high concentration in an acidic environment, which causes deleterious interactions with many electrode materials not made from noble metal. While noble metals may be useful as an electrode material, their economic disadvantages are prohibitive to their use in large scale applications such as RFBs.

US6986966B2, US7214443B2, US7270911B2, US7252905B2 disclose the use of glassy carbon for $Ce^{3+}$ oxidation. However, glassy carbon is expensive, difficult to machine and prone to fracture, thus not very suitable for RFB applications. Furthermore, most flow batteries with acid electrolyte degrade carbon-based electrodes as disclosed in US7033696B2. While Nikiforidis et al., first mentioned in Journal of Power Sources Volume 243, 2013, Pages 691-698 that Pt-Ir and SGL carbon electrodes are best for $Ce^{9+}$, they proceed with the far more expensive Pt-Ir anyway and later disclosed in Electrochimica Acta, 2014, 115. pp. 621-629 that carbon electrodes degrade rapidly, so that Pt-Ir electrodes are required for Zn/Ce RFBs operating with methane sulfonic acid. Nikiforidis et al. showed later in Electrochimica Acta, Volume 157, 2015, Pages 274-281 that pristine carbon paper can be used for $Ce^{3+}$ oxidation, but not only have such electrodes a low surface area, they are also rapidly degraded (as witnessed by the reduction of the $Ce^{4+}$ peak with increasing with cycle number), which the authors mentioned as: "the deterioration of the CP surface was also confirmed by the decrease of the electrical conductivity...".

Embodiments, wherein a carbon material has been used for the chemically much more aggressive combination of a $Cr^{III}/Cr^{VI}$ redox couple with a $Ce^{4+}/Ce^{3+}$ redox couple and a strong acid such as methane sulfonic acid, sulfuric acid and the like have not been disclosed yet.

Accordingly, it was the object of the present invention to develop a suitable electrode material essentially not consisting of noble metal for a positive (cathodic) half-cell employing the $Cr^{III}/Cr^{VI}$ redox couple in combination with a $Ce^{4+}/Ce^{3+}$ redox couple and a strong acid such as methane sulfonic acid, sulfuric acid and the like.

**SUMMARY OF THE INVENTION**

In a first aspect, the present invention provides a rechargeable redox flow battery (RFB) comprising an electrochemical cell comprising at least one positive electrode in a positive half-cell and a negative electrode in a negative half-cell, an ion-conducting membrane between the two half-cells, wherein the membrane is designed for dual acidic anolyte and catholyte or designed for an acidic catholyte and an alkaline anolyte; at least two storage tanks for catholyte and anolyte, optionally one or more pumps to circulate stored catholyte and anolyte through the cathodic and anodic half cells, respectively, and at least one anolyte and at least one catholyte;

wherein the anolyte comprises at least one fuel capable of reversible oxidation, at least one electrolyte for conductivity and at least one solvent; and the catholyte comprises a $Cr^{III}/Cr^{VI}$ redox couple, at least one strong acid, a $Ce^{4+}/Ce^{3+}$ redox couple and

at least one solvent, and
wherein the positive electrode is made from carbon.

In another aspect, the present invention also relates to the use of the redox flow battery as described herein to store electrical energy for grid-level energy storage, homeowner energy storage, remote locations, firming or load leveling of intermittent renewable electricity generation site, preferably wind and solar farms, micro-hydropower, geothermal energy, tidal power, energy arbitrage, portable and/or personal electronics, electric vehicles such as ships, submarines, planes, unmanned underwater vehicles (UUVs) or unmanned aerial vehicles (UAVs), military electronics equipment, satellites and other manned or unmanned spacecraft, or other applications where rechargeable RFBs can be beneficially employed.

A further aspect of the present invention is a method for operating the positive half-cell of the RFB and for storing electrical energy in said RFB comprising:

a) charging the RFB by applying a potential to the positive half-cell of the battery of essentially not more than 1,5 V vs. Ag/AgCl,
b) discharging the RFB by connecting the positive and negative electrode to a load.

**BRIEF DESCRIPTION OF THE FIGURES**

FIG 1: Schematic illustration of a redox flow battery comprising (1) anolyte storage tank; (2) catholyte storage tank; (3) anolyte chamber; (4) catholyte chamber; (5) anode; (6) cathode; (7) selectively permeable ion-conducting membrane; (8) pump for anolyte; (9) pump for catholyte.

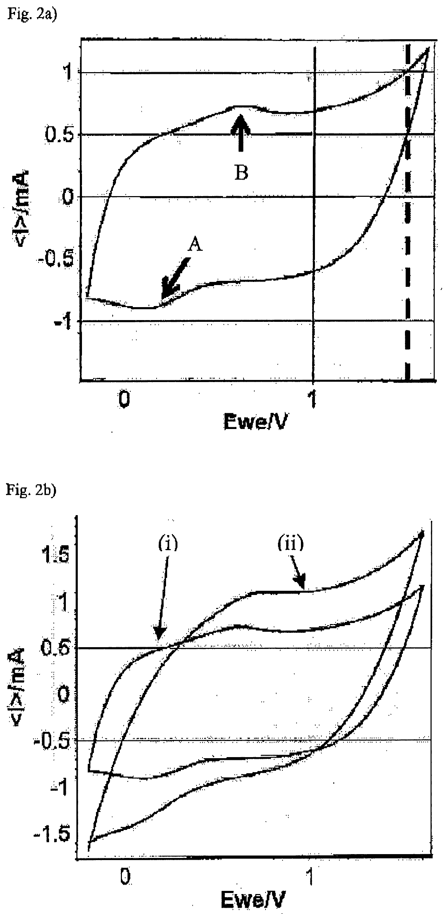

FIG 2: CV scan of heat-treated (oxygen-functionalized) SGL Sigracell GFD, heated to 400°C for 20 h in 0.1 M $H_2SO_4$, CV Scan Rate 100 mV/s

FIG 2a) shows extremely slow carbon oxidation in the range from +0.9 to + 1.5 V and the onset of rapid carbon oxidation from +1.5 V vs Ag/AgCl. The bumps A and B in the curve at +0.3 V and at +0.75 V origin from native reversible redox reactions of carbon semiquinones.

FIG 2b) shows the results before (i) and after (ii) exposure to +1.6 V vs Ag/AgCl for 30 min.

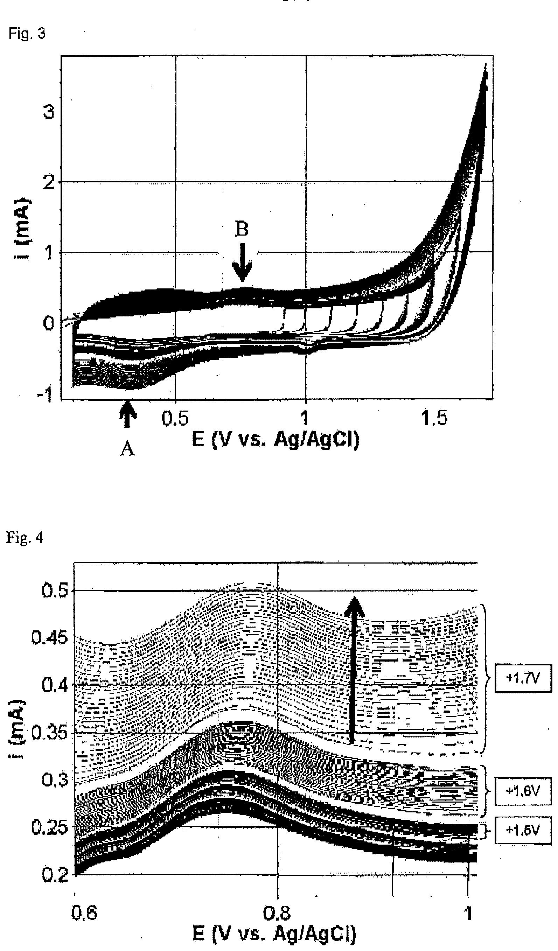

FIG 3: CV scan of heat-treated SGL Sigracell GFD in 2 M $CH_3SO_3H$, CV Scan Rate 50 mV/s, 30 cycles each from +0.1 V to +0.9, +1.0, +1.1, +1.2, +1.3, +1.4, +1.5, +1.6, and +1.7 V vs. Ag/AgCl. The bumps A and B in the curve at +0.3V and at +0.75 V origin from native reversible redox reactions of carbon semiquinones. FIG 3 als shows the onset of rapid carbon oxidation from +1.5 V vs Ag/AgCl.

FIG 4: Zoom-in of Peak B of Figure 3. Up to 1.5V the growth of the peaks is slowing down over the number of cycles and reaches a limiting value. At applied potentials of higher than 1.5V vs. Ag/AgCl the peak growth is continuous and does not reach a limiting value.

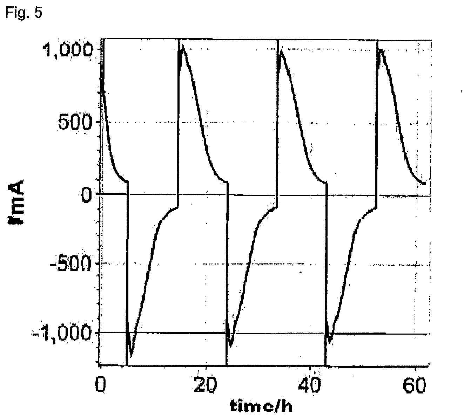

FIG 5: CV scan in Cr-Ce half cell 1 M $Cr_2O_7^{2-}$, 0.5 M $Ce^{4+}$ in 1.5 M MSA, $E_{appl} \leq$ +1.5 V vs. Ag/AgCl

**DETAILED DESCRIPTION**

An "$EC_{cat}$ mechanism" (also denoted as EC' in Bard and Faulkner In "Electrochemical Methods: Fundamentals and Applications", 2nd Ed. 2001) is described in the following general manner: it consists of an electrochemical step (hereafter E) in which a given species A is converted to species B. This is followed by a subsequent chemical-catalytic step (hereafter $C_{cat}$) between B and species C, which regenerates species A from B and produces product D from C. The regeneration of A represents a catalytic process that gives an apparent increase in concentration of A near the electrode surface, generating higher than expected electrochemical current for the reduction of A to B:

$$E: \quad A + 1\,e^- \longrightarrow B$$

$$C_{cat}: \quad B + C - A + D$$

Since regenerated A must remain at the electrode surface to be detected, high currents are detected at (1) shorter time periods between consumption and regeneration of A and (2) decreased flow rates of solution across the electrode, which decrease the time for transport and the rate of transport for A leaving the electrode surface.

The observed "electrochemical potential," or simply "potential," E, of a given soluble redox species (e.g., $Ce^{4+}$) participating in a reversible reduction (e.g. $Ce^{4+} + 1\ e^- \leftrightarrows Ce^{3+}$) is defined by the Nernst equation:

$$E = E^0 + RT/nF\ ln(C_{ox}/C_{red})$$

where $C_{ox}$ and $C_{rod}$ are the respective concentrations of the oxidized and reduced forms of the given redox species (e.g. $Ce^{4+}$ and $Ce^{3+}$), $n$ is the number of electrons involved in the conversion of the oxidized to the reduced form of the given redox species, R is the universal gas constant, T is the temperature, and F is Faraday's constant. The term $E^0$ is the standard potential of the redox species, which is the observed potential (E) when $C_{ox}$ = $C_{ro}d$. In the context of the invention, the Nernst equation implies that the potential of a given reversible redox species varies from its $E^0$ depending on the ratio of the concentrations of the oxidized to reduced form. Thus a ratio of $Ce^{4+}$ to $Ce^{3+}$ of 99 to 1 shifts the E of $Ce^{4+}$ positive by 0.120 V, and a ratio of 99.96 to 0.04 shifts E positive by 0.200 V.

A "rotating disk electrode," RDE, is used in RDE voltammetry to achieve laminar flow across an electrode surface. When planar RDEs are used, as in the results presented herein, RDE voltammetry allows direct assessment of a multitude of fundamental parameters of a given fuel or oxidant for use in RFBs. Because RDE voltammetry assesses fundamental parameters, rather than a given fuel cell's or RFB's performance, RDE voltammetry results are universally comparable across all possible systems.

The "mass transport limited current", $i_L$ of an electrochemical reaction in RDE voltammetry is the maximum obtainable current at a given RDE rotation rate. Since the $i_L$ is a function of the steady-state transport that originates from laminar flow across the RDE, the $I_L$ is independent of potential, and appears as a horizontal line in an RDE voltammogram.

The half-wave potential, $E_{1/2}$, of a given electrochemical reaction in RDE voltammetry is the potential at which ½ of the $i_L$ is achieved. A reasonably accurate measurement of $E_{1/2}$ must be performed at fairly low current density; at high current density in analytical glassware, solution resistance distorts the RDE voltammogram with a diagonal line that significantly shifts the $E_{1/2}$. To achieve low current density for a high n oxidant like $Cr_2O_7{}^{2-}$, low concentration (1 to 10 mM) and low to moderate rotation rate (50 to 3000 rpm) must be used. In the context of the Invention, the $E_{1/2}$ is useful as a first-order assessment of the operating potential of a given electrode, and thus the operating voltage of a RFB.

The terms "NHE" and "Ag/AgCl" refer to two standard types of reference electrodes used to measure the E of an electrode, where NHE is the Normal Hydrogen Electrode and Ag/AgCl is the silver / silver chloride electrode, and a given $E_{Ag/AgCl} = E_{HHE}$ - 0.197 V. Unless stated otherwise, all unreferenced potentials are shown as V vs. Ag/AgCl, not V vs. NHE.

The term storage tank refers to vessels wherein one or more liquids and/or gases can be stored. The liquids and/or gases may be separated from each other by a baffle or other suitable partition walls.

The terms anolyte and catholyte are familiar to the person skilled in the art of RFBs and are described e.g. in Weber, A.Z., Mench, M.M., Meyers, J.P. et al. J. Appl. Electrochem., 2011, 41, 1137-1164.

Typically, the catholyte of the redox flow battery as described herein is a liquid comprising a $Cr^{III}/Cr^{VI}$ redox couple, a $Ce^{4+}/Ce^{3+}$ redox couple as an reversible electron mediator, a strong acid such as methane sulfonic acid, sulfuric acid and the like as an electrolyte for conductivity (and pH control) and a solvent.

In a preferred embodiment, the anolyte of the redox flow battery as described herein is a liquid comprising a solution of a fuel capable of reversible oxidation; an electrolyte for conductivity (and pH control) and a solvent.

Using the combination of a $Cr^{III}/Cr^{VI}$ redox couple with a $Ce^{4+}/Ce^{3+}$ redox couple together with a strong acid such as methane sulfonic acid, sulfuric acid and the like provided some difficulties in finding a suitable electrode material.

Surprisingly, the problem could be solved by a rechargeable redox flow battery (RFB) comprising an electrochemical cell comprising at least one positive electrode in a positive half-cell and a negative electrode in a negative half-cell, an ion-conducting membrane between the two half-cells, wherein the membrane is designed for dual acidic anolyte and catholyte or designed for an acidic catholyte and an alkaline anolyte; at least two storage tanks for catholyte and anolyte, optionally one or more pumps to circulate stored catholyte and anolyte through the cathodic and anodic half cells, respectively, and at least one anolyte and at least one catholyte;

wherein the anolyte comprises at least one fuel capable of reversible oxidation, at least one electrolyte for conductivity and at least one solvent; and the catholyte comprises the $Cr^{III}/Cr^{VI}$ redox couple, a strong acid, the $Ce^{4+}/Ce^{3+}$ redox couple as the electrochemically reversible electron mediator and at least one solvent, wherein the positive electrode is made from carbon.

The strong acid used for the catholyte includes acids with a $pK_a$ of 2 or less, e.g. methane sulfonic acid, $HNO_3$, $H_2SO_4$, $HClO_4$, $H_3PO_4$, or mixtures thereof, preferably methane sulfonic acid. As the acid can be (reversibly) consumed during the operation of the RFB, the term strong acid encompasses in a preferred embodiment also the deprotonated form of the respective acid if these would undergo transformation to such acids during the typical operation of the RFB .

The electrolyte for the anolyte includes acids with a $pK_a$ of 2 or less e.g. methane sulfonic acid, $HNO_3$, $H_2SO_4$, $HClO_4$, $H_3PO_4$, or mixtures thereof, and also electrolytes for conductivity such as $MClO_4$, $MNO_3$, $M_2SO_4$, MF, MCl, MBr, or MI, where M = Li, Na, or K, tetra-n-butylammonium X, where X = F, Cl, Br, I, or hexafluorophosphate.

The reversible fuel for the anolyte is typically a liquid comprising a redox couple selected from the group consisting of $Zn^{2+}/Zn^0$; $H^+/H_2$; $V^{III}/V^{II}$; $Cr^{II}/Cr^0$: $Cr^{III}/Cr^{II}$; $Al^{III}/Al^0$; $Zr^{IV}/Zr^0$; $Co^{II}/Co^0$; $Ni^{II}/Ni^0$; $Cd^{II}/Cd^0$; $In^{III}/In^{II}/In^I/In$; $Ga^{III}/Ga^I/Ga$; $Sn^{II}/Sn$: $Sn^{IV}/Sn^{II}$; $Sb^{III}/Sb^0$; $Pb^{II}/Pb^0$; $Li^I/Li^0$; $Na^I/Na^0$; and/or the oxidized and reduced conjugates of anthraquinone 2,6-disulfonate, and mixtures thereof.

Accordingly, the cathode can be made from any polymorph of conductive ($sp^2$) carbon or doped diamond, including carbons that are partially nonconductive ($sp^3$), partially oxidized (with various oxygen functionalities, such as -CO, -CO$_2$H, and quinone or semiquinone moieties), partially fluorinated, or have been subjected to various heat treatments. Such polymorphs include, but are not limited to, graphite, carbon black, vulcanized rubber, glassy carbon, carbon papers, carbon felts, charcoal, and boron-doped diamond. Typical examples are carbon black, carbon felt, graphite, carbon and graphite felt, carbon flakes, carbon paper, carbon fiber, carbon nanotubes, carbon nanofibers, graphene and/or glassy carbon, preferably from carbon felt, carbon and graphite felt, and/or carbon black, most preferably from carbon and graphite felt. In particular embodiments the carbon of the positive electrode can comprise catalytically active metals selected from Pd, Ag, Pt, Ni, Ir, Ru, Rh, Au, can be doped with nitrogen or can be activated e.g. by thermal treatment, acid treatment, hydrogen peroxide treatment and/or plasma treatment.

In a preferred embodiment, the Ce$^{4+}$/Ce$^{3+}$ redox couple is used in the form of cerium(III) methanesulfonate, which means partially, mainly or only Ce(CH$_3$SO$_3$)$_3$ is employed as the Ce$^{3+}$ species. Ce(CH$_3$SO$_3$)$_3$ has a high solubility of >2 M In methane sulfonic acid, CH$_3$SO$_3$H. This compound can be prepared from the inexpensive precursors cerium carbonate, Ce$_2$(CO$_3$)$_2$, and methane sulfonic acid. At the same time, Cr$^{VI}$/Cr$^{3+}$ is preferably employed in the form of chromium(III) methanesulfonate, which means partially, mainly or only Cr(CH$_3$SO$_3$)$_3$ is employed as the Cr$^{3+}$ species. This compound can be prepared by dissolving CrO$_3$ in water to form H$_2$Cr$_2$O$_7$, subsequently reducing the Cr$^{VI}$ to Cr$^{3+}$ with hydrogen peroxide (H$_2$O$_2$) followed by addition of methane sulfonic acid. In this embodiment, methane sulfonic acid is preferably employed as a strong acid in the catholyte.

In a preferred embodiment, Zn is employed as the fuel for the anodic half-cell. Preferably *Zn* is employed in form the Zn$^{2+}$ / Zn$^0$ redox couple wherein the Zn$^{2+}$ species consists partially, mainly or only of Zn(CH$_3$SO$_3$)$_2$, i.e. zinc(II). This compound can be prepared from ZnO and CH$_3$SO$_3$H. In this embodiment, methane sulfonic acid is preferably employed as a strong acid in the anolyte.

With respect to the above, "partially" refers to an amount of 20 to 50 mol% of the metal ions, "mainly" to an amount of 55 to 99 mol%, preferably 70 to 90 mol% of the metal ions, and "completely" to more than 99 mol% to 100 mol% of the metal ions.

In one embodiment of the invention, the initial battery formulation contains Zn in form of Zn$^0$, e.g. a zinc plate and Cr in form of Cr$_2$O$_7$$^{2-}$.

In a preferred embodiment of the invention, the initial battery formulation contains Zn in form of a Zn$^{2+}$ and Cr in form of Cr$^{3+}$. This embodiment provides the following advantages:

  1. The Zn$^0$ (fuel) side of the battery can be constructed / shipped without pre-formed Zn° deposits. That is, the Zn$^0$ electrode can be built simply from carbon plates and does not need a film of Zn$^0$ pre-deposited. The fuel solution can contain Zn$^{2+}$, which is stable, unlike Zn$^0$, which readily decomposes in water to form H$_2$ gas.
  2. The entire battery can be constructed / shipped in a discharged state. Both the fuel (Zn°) and the oxidant (Cr$^{VI}$) are in the discharged states of Zn$^{2+}$ and Cr$^{3+}$, making the solution less reactive and less toxic for shipping and on-site construction of large, grid-level batteries.
  3. The Cr$^{VI}$ (oxidant) side of the battery generates its own acid instead of becoming acid-starved during battery operation. If the battery is started from Zn$^0$ and Cr$_2$I$_7$$^{2-}$, then 1 M Cr$_2$O$_7$$^{2-}$ solution would require 14 M methane sulfonic acid in order to be completely reduced to Cr$^{3+}$. As such high concentration of methane sulfonic acid would limiting the solubility of Cr$^{3+}$ species, and thus decrease the performance of the battery.

This configuration allows for all species to coexist in the solution and yet still produce enough acid to consume all of the Cr$^{VI}$ generated. The preferable molar ratio of Cr(CH$_3$SO$_3$)$_3$ to Ce(CH$_3$SO$_3$)$_3$ in the anolyte is in the range from 1:1 to 5:1, particularly preferably from 2:1 to 3:1 and most preferably 2,7:1.

When carbon electrodes are subjected to potentials above +1.0 V vs. Ag/AgCl in an acidic media, the carbon begins to oxidize. Oxidation of carbon increases its surface area. This in turn increases the size of carbon's native surface peaks, which are generated from the reversible oxidation and reduction of semiquinone-like species. Thus the extent of peak growth is used as an assessment of stability of the carbon electrode at the applied potential - the greater the size of the peaks, the greater the surface area, and hence the greater the amount of oxidative damage to the carbon surface from the applied potential.

Surprisingly, it has been found that at applied potentials of up to +1.5 V vs. Ag/AgCl, the growth of the peaks is slowing down over the number of cycles and reaches a limiting value. At applied potentials of higher than 1.5V vs. Ag/AgCl the peak growth is continuous and does not reach a limiting value. This reflects a continuous degradation of the carbon at potentials ≥ +1.5 V.

In order to achieve a high number of cycles the potential applied to the positive half-cell during charging of the battery should essentially not exceed 1,50 V, preferably 1,45 V and most preferably 1,4 V vs. Ag/AgCl. Essentially means that less than 50 % of the charge, preferably less than 20 % of the charge, more preferably less than 8% of the charge, particularly preferably less than 3 % of the charge and most preferably less than 1% of the charge should occur at a potential above the specified one.

Another embodiment of the invention is a method for operating a positive half-cell in a rechargeable redox flow battery. (RFB) comprising an electrochemical cell comprising at least a positive electrode in a positive half-cell and a negative electrode in a negative half-cell, an ion-conducting membrane between the two half-cells, and at least a anolyte and at least a catholyte; wherein the catholyte comprises the $Cr^{III}/Cr^{VI}$ redox couple, a strong acid, the $Ce^{4+}/Ce^{3+}$ redox couple and at least s solvent, wherein the positive electrode is made from carbon, wherein the potential applied to the positive half-cell during charging of the battery should essentially not exceed 1,50 V, preferably 1,45 V and most preferably 1,4 V vs. Ag/AgCl.

In a preferred embodiment, the anolyte contains $In^{3+}$ and/or the anode $In^0$. Thus, the spontaneous oxidation of $Zn^0$ under formation of $H_2$ in aqueous media can be suppressed. Sub-stoichiometric amounts of In with regard to Zn are sufficient, such as less than 50 mol%, preferably less than 15 mol% more preferably less 5 mol% and most preferably 1 mol% and less are sufficient. When Zn and In are co-deposited on the anode, the resulting $Zn_{gg}In_{01}$ alloy has a surface with greatly reduced activity for $H_2$ evolution. The molar amount of In with regard to Zn In the anolyte and anode is less than 50 mol%, preferably less than 15 mol% more preferably less than 5 mol% and most preferably not more than 1 mol%.

While high current efficiencies for Zn deposition at carbon electrodes can be achieved by high concentrations of $Zn(CH_3SO_3)_2$ in $CH_3SO_3H$ (methane sulfonic acid), Zn showed a current efficiency of 83% for 2 M $Zn(CH_3SO_3)_2$ in 1 M $CH_3SO_3H$ only when stripping at very low voltage efficiency in order for Zn stripping to outpace Zn decomposition to $H_2$.

Indium shows 67 to 77% current efficiency for 0.1 M $InCl_3$ in 3 M $CH_3SO_3H$, with significantly lower current efficiencies at longer deposition times. This suggests that In rapidly decomposes to $H_2$ and $In^{3+}$ when left in solution.

However, Zn-In showed up to 100% current efficiency analytically and 70 to 90% current efficiency at the device level. Moreover, Zn and In significantly stabilize one another to suppress oxidation of Zn and/or In under $H_2$ formation. Economically advantageous In ingots can be easily dissolved in $CH_3SO_3H$ as a substitute for expensive $InCl_3$.

Zn-In shows 87% current efficiency at 83% estimated voltage efficiency using the following potential program:

a) a potential of -1.5 (+/- 0.1) V vs. Ag/AgCl is applied for a short period of time (shorter than the following steps b) an c)) to rapidly deposit Zn-In,

b) a potential of -1.1 (+/- 0.1) V is applied to deposit much more Zn-In,

c) a potential of -0.7 (+/- 0.1) V is applied until the oxidation current greatly decreases,

d) a potential of 0 to -0.3 V is applied for a shorter period than steps b) an c) to remove layers of In that protect Zn and prevent it from being stripped at -0.7 V.

In step a), the deposited Zn-In can cover the carbon electrode and block carbon from creating $H_2$ as Zn-In has a higher overpotential for $H_2$ evolution than carbon and the sooner the carbon is covered, the less $H_2$ is generated by passing current through the electrode.

Step b) lasts for a longer period of time (e.g. 1 h). At potential of -1.1 V (+/- 0.1V) more Zn-In is deposited at lower overpotential. Said potential represents only 0.1 V (+/- 0.1V) overpotential for Zn deposition.

Step c) also lasts for a longer period of time (e.g. 1 h). A somewhat high overpotential for stripping (0.3 V) seems advantageous to strip off Zn-In fast enough to limit the competing decomposition to $H_2$.

In step d), Zn-In is stripped for a short period of time to remove layers of In that protect $Z_n$ (and prevent it from being stripped at -0.7 V). Though Zn and In codeposit at the same potential, In requires higher potentials for stripping than Zn.

A further improvement of charge efficiency can be effected by combining the embodiments according to the invention with a (catalytic) $H_2$ recombinator to ensure that the battery remains balanced during multiple cycles. $H_2$ recombinators are devices known to the person skilled in the art and used e.g. in commercially available Zn-$Br_2$ RFBs.

In the present invention, the solvent(s) for the catholyte and anolyte can be selected from the group consisting of water or a nonaqueous solvent, such as acetonitrile, dimethyl sulfoxide, dimethyl formamide, methanol, ethanol, 1-propanol, isopropanol, ether, diglyme, tetrahydrofuran, glycerol, and mixtures thereof.

In another aspect, the present Invention relates to the use of the redox flow battery as described herein to store electrical energy for grid-level energy storage, homeowner energy storage, remote locations, firming or load leveling of intermittent renewable electricity generation site, preferably wind and solar farms, micro-hydropower, geothermal energy, tidal power, energy arbitrage, portable and/or personal electronics, electric vehicles such as ships, submarines, planes, unmanned underwater vehicles (UUVs) or unmanned aerial vehicles (UAVs), military electronics equipment, satellites and other manned or unmanned spacecraft, or other applications where rechargeable RFBs can be beneficially employed.

Those of skill in the art will realize that many modifications and variations can be employed without departing from the spirit and scope of the invention. The present invention is now further illustrated by reference to the following, non-limiting examples.

## EXAMPLES

**Synthesis of cerium(III) methane sulfonate,** $Ce(CH_3SO_3)_3$

A saturated solution of $Ce_3(CO_3)_2$ was prepared in water, with excess $Ce_3(CO_9)_2$ lying on the bottom of the glassware. Pure (15.4 M) $CH_3SO_3H$ was then added to the solution while stirring until some of the $Ce_3(CO_3)_2$ dissolves. At this stage, excess solid $Ce_3(CO_3)_2$ was still present at the bottom of the glassware. The supernatant was then separated from the solid $Ce_3(CO_3)_2$, placed in a watch glass or petri dish and heated in an oven to 120 to 150°C to evaporate the water and excess $CH_3SO_3H$, leaving a precipitate of $Ce(CH_3SO_3)_3$.

**Synthesis of zinc(II) methane sulfonate,** $Zn(CH_3SO_3)_2$

ZnO was dissolved in $CH_3SO_3H$, and the $O^{2-}$ counterion is reacted to $H_2O$ in acid, yielding a solution containing only $Zn(CH_3SO_3)_2$ and $CH_3SO_3H$ and water, which could be used without the need to precipitate $Zn(CH_3SO_3)_2$

**Synthesis of chromium(III) methane sulfonate** $Cr(CH_3SO_3)_3$

A saturated solution of $H_2Cr_2O_7$ was prepared by dissolving $CrO_3$ in water. Then, the saturated $H_2Cr_2O_7$ was added dropwise to a solution of 50% pure (15.4 M) $CH_3SO_3H$ and 50% of 30%-by-mass (9.8 M) $H_2O_2$ under cooling in a cold-water bath to prevent the solution from boiling. The resulting solution was stirred and additional $H_2O_2$ added dropwise until all of the $Cr^{VI}$ has been reduced to $Cr^{3+}$, which was evident by a change in coloration of the solution. Subsequently, a solution of 2 M $Cr^{3+}$ was prepared by adding $H_2Cr_2O_7$ to $CH_3SO_3H$ in a 1:6 ratio, which corresponds to a 2:6 or 1:3 ratio of $CrO_3$ to $CH_3SO_3H$.

**Synthesis of an anolyte starting material**

$Ce(CH_3SO_3)_3$ was added to the solution obtained from the synthesis of chromium(III) methane sulfonate to obtain an anolyte starting material.

**Cr-Ce Half Cell Testing**

Cycling a half cell containing a carbon made cathode and 1M $Cr_2O_7^{2-}$, 0.f M $Ce^{4+}$, 1.5 M $Cr(CH_3SO_3)_3$, at $\leq$ +1.5 V vs. Ag/AgCl for 40 times showed no visual evidence of carbon degradation (appearance of carbon dust Inside device channels or in electrolyte reservoirs), which was quite evident when operating the half cell at >1.5 V under otherwise identical conditions.

**Claims**

1. Rechargeable redox flow battery (RFB) comprising an electrochemical cell comprising at least a positive electrode in a positive half-cell and a negative electrode in a negative half-cell, an ion-conducting membrane between the two half-cells, wherein the membrane is designed for dual acidic anolyte and catholyte or designed for an acidic catholyte and an alkaline anolyte; at least two storage tanks for catholyte and anolyte, optionally one or more pumps to circulate stored catholyte and anolyte through the cathodic and anodic half cells, respectively, and at least one anolyte and at least one catholyte; wherein the anolyte comprises at least one fuel capable of reversible oxidation, and a Zn2+/Zn0 redox couple and In3+ at least one electrolyte for conductivity and at least one solvent; and the catholyte comprises a $Cr^{III}/Cr^{VI}$ redox couple, at least one strong acid, a $Ce^{4+}/Ce^{3+}$ redox couple and at least one solvent,

   wherein the positive electrode is made from carbon,
   wherein the molar amount of In with regard to Zn in the anolyte and anode is less than 50 mol%, preferably less than 15 mol% more preferably less than 5 mol% and most preferably not more than 1 mol%.

2. RFB according to Claim 1, wherein the strong acid is selected from methane sulfonic acid, $HNO_3$, $H_2SO_4$, $HClO_4$, $H_3PO_4$, or mixtures thereof, preferably methane sulfonic acid.

3. RFB according to Claim 1 or 2, wherein the positive electrode is made from carbon black, carbon felt, graphite, carbon and graphite felt, carbon flakes, carbon paper, carbon fiber, carbon nanotubes, carbon nanofibers, graphene and/or glassy carbon, preferably from carbon felt, carbon and graphite felt, and/or carbon black, most preferably from carbon and/or graphite felt.

4. RFB according to any of Claims 1 to 3, wherein the carbon of the positive electrode comprises catalytically active metals selected from Pd, Ag, Pt, Ni, Ir, Ru, Rh, Au, has been doped with nitrogen and/or has been activated e.g. by thermal treatment, acid treatment, hydrogen peroxide treatment and/or plasma treatment.

5. RFB according to any of Claims 1 to 4 wherein the anolyte comprises the $Zn^{2+}/Zn^0$ redox couple, at least methane sulfonic acid and/or its anion as an electrolyte for conductivity and at least one solvent.

6. RFB according to any of Claims 1 to 5, wherein $Zn^{2+}/Zn^0$ is used in form of zinc (II) methane sulfonate, the $Cr^{III}/Cr^{VI}$ redox couple is used in form of chromium (III) methane sulfonate and $Ce^{3+}$ in the $Ce^{4+}/Ce^{3+}$ redox couple is used in form of cerium (III) methane sulfonate.

7. RFB according to any of Claims 1 to 6 wherein the negative electrode contains $In^0$.

8. RFB according to any of Claims 1 to 7 which further comprises a $H_2$ recombinator.

9. Method for operating a RFB according to any of Claims 1 to 8 wherein the potential applied to the positive half-cell during charging of the battery is essentially not more than 1,5 V vs. Ag/AgCl, preferably not more than 1,45 V vs. Ag/AgCl and most preferably not more than 1,4 V vs. Ag/AgCl.

10. Method for operating a RFB according to any of Claims 1 to 8 wherein the following potential program is applied to the negative half-cell:

    a) a first potential of -1.5 (+/- 0.1) V vs. Ag/AgCl is applied for a shorter period than the following steps b) an c) to rapidly deposit Zn-In,
    b) a potential of -1.1 V (+/- 0.1V) is applied to deposit more Zn-In,
    c) a potential of -0.7 V (+/- 0.1V) is applied until the oxidation current greatly,
    d) a potential of 0 to -0.3 V is applied for a shorter period than steps b) an c) to remove layers of In that protect Zn.

11. Use of the RFB according to any one of claims 1 to 8 to store electrical energy for grid-level energy storage, homeowner energy storage, remote locations, firming or load leveling of intermittent renewable electricity generation site, preferably wind and solar farms, micro-hydropower, geothermal energy, tidal power, energy arbitrage, portable and/or personal electronics, electric vehicles such as ships, submarines, planes, unmanned underwater vehicles (UUVs) or unmanned aerial vehicles (UAVs), military electronics equipment, satellites and other manned or unmanned spacecraft, or other applications where rechargeable RFBs can be beneficially employed.

12. A method for storing electrical energy comprising:

    a) charging the RFB according to any one of claims 1 to 8 by supplying a current power source to the positive and negative electrode,
    b) discharging the RFB by connecting the positive arid negative electrode to a load.

13. A method for storing electrical energy according to Claim 12, wherein the potential applied to the positive half-cell during charging of the battery is essentially not more than 1,5 V vs. Ag/AgCl, preferably not more than 1,45 V vs. Ag/AgCl and most preferably not more than 1,4 V vs. Ag/AgCl.

**Patentansprüche**

1. Wiederaufladbare Redox-Flow-Batterie (RFB) mit einer elektrochemischen Zelle, die mindestens eine positive Elektrode in einer positiven Halbzelle und eine negative Elektrode in einer negativen Halbzelle umfasst, mit einer ionenleitenden Membran zwischen den beiden Halbzellen, wobei die Membran für einen doppelten sauren Anolyten und Katholyten oder für einen sauren Katholyten und einen alkalischen Anolyten ausgelegt ist; mindestens zwei Lagertanks für den Katholyten und den Anolyten, optional eine oder mehrere Pumpen, um den gelagerten Katholyten und Anolyten jeweils durch die kathodische bzw. anodische Halbzelle zu zirkulieren, und mindestens einen Anolyten und mindestens einen Katholyten; wobei der Anolyt mindestens einen Brennstoff, der zur reversiblen Oxidation fähig ist, und ein $Zn^{2+}/Zn^0$-Redoxpaar und $In^{3+}$ mindestens einen Elektrolyten für die Leitfähigkeit und mindestens ein Lösungsmittel umfasst; und wobei der Katholyt ein $Cr^{III}/Cr^{VI}$-Redoxpaar, mindestens eine starke Säure, ein $Ce^{4+}/Ce^{3+}$-Redoxpaar und mindestens ein Lösungsmittel umfasst,

    wobei die positive Elektrode aus Kohlenstoff hergestellt ist,
    wobei die molare Menge an In in Bezug auf Zn im Anolyt und in der Anode weniger als 50 Mol%, vorzugsweise weniger als 15 Mol%, noch bevorzugter weniger als 5 Mol% und am meisten bevorzugt nicht mehr als 1 Mol% beträgt.

2. RFB nach Anspruch 1, wobei die starke Säure ausgewählt ist aus Methansulfonsäure, $HNO_3$, $H_2SO_4$, $HClO_4$, $H_3PO_4$ oder Mischungen davon, vorzugsweise Methansulfonsäure.

3. RFB nach Anspruch 1 oder 2, wobei die positive Elektrode aus Ruß, Kohlenstofffilz, Graphit, Kohlenstoff- und Graphitfilz, Kohlenstoffflocken, Kohlenstoffpapier, Kohlenstofffaser, Kohlenstoffnanoröhren, Kohlenstoffnanofasern, Graphen und/oder glasartigem Kohlenstoff, vorzugsweise aus Kohlenstofffilz, Kohlenstoff- und Graphitfilz und/oder Ruß, besonders bevorzugt aus Kohlenstoff- und/oder Graphitfilz, hergestellt ist.

4. RFB nach einem der Ansprüche 1 bis 3, wobei der Kohlenstoff der positiven Elektrode katalytisch aktive Metalle, die aus Pd, Ag, Pt, Ni, Ir, Ru, Rh, Au ausgewählt sind, umfasst und mit Stickstoff dotiert wurde und/oder z. B. durch thermische Behandlung, Säurebehandlung, Wasserstoffperoxidbehandlung und/oder Plasmabehandlung aktiviert wurde.

5. RFB nach einem der Ansprüche 1 bis 4, wobei der Anolyt das $Zn^{2+}/Zn^0$-Redoxpaar, mindestens Methansulfonsäure und/oder ihr Anion als Elektrolyt für die Leitfähigkeit und mindestens ein Lösungsmittel umfasst.

6. RFB nach einem der Ansprüche 1 bis 5, wobei $Zn^{2+}/Zn^0$ in Form von Zink(II)-Methansulfonat, das $Cr^{III}/Cr^{VI}$-Redoxpaar in Form von Chrom(III)-Methansulfonat und $Ce^{3+}$ im $Ce^{4+}/Ce^{3+}$-Redoxpaar in Form von Cer(III)-Methansulfonat verwendet wird.

7. RFB nach einem der Ansprüche 1 bis 6, wobei die negative Elektrode $In^0$ enthält.

8. RFB nach einem der Ansprüche 1 bis 7, die außerdem einen $H_2$-Rekombinator enthält.

9. Verfahren zum Betreiben einer RFB nach einem der Ansprüche 1 bis 8, wobei das während des Ladens der Batterie an die positive Halbzelle angelegte Potential im Wesentlichen nicht mehr als 1,5 V gegenüber Ag/AgCl, vorzugsweise nicht mehr als 1,45 V gegenüber Ag/AgCl und am meisten bevorzugt nicht mehr als 1,4 V gegenüber Ag/AgCl beträgt.

10. Verfahren zum Betreiben einer RFB nach einem der Ansprüche 1 bis 8, wobei das folgende Potentialprogramm an die negative Halbzelle angelegt wird:

   a) ein erstes Potenzial von -1,5 (+/- 0,1) V gegenüber Ag/AgCl wird für einen kürzeren Zeitraum als in den folgenden Schritten b) und c) angelegt, um Zn-In schnell abzuscheiden,
   b) ein Potenzial von -1,1 V (+/- 0,1 V) wird angelegt, um mehr Zn-In abzuscheiden,
   c) ein Potenzial von -0,7 V (+/- 0,1 V) wird angelegt, bis der Oxidationsstrom stark abnimmt,
   d) ein Potenzial von 0 bis -0,3 V wird für einen kürzeren Zeitraum als bei den Schritten b) und c) angelegt, um die In-Schichten zu entfernen, die das Zn schützen.

11. Verwendung der RFB nach einem der Ansprüche 1 bis 8 zur Speicherung elektrischer Energie für die Energiespeicherung auf Stromnetzebene, die Energiespeicherung für Hausbesitzer, abgelegene Standorte, die Stabilisierung oder den Lastausgleich von intermittierenden erneuerbaren Stromerzeugungsstandorten, vorzugsweise Wind- und Solarparks, Mikro-Wasserkraft, geothermische Energie, Gezeitenkraft, Energiearbitrage, tragbare und/oder persönliche elektronische Geräte, elektrische Fahrzeuge wie Schiffe, U-Boote, Flugzeuge, unbemannte Unterwasserfahrzeuge (UUVs) oder unbemannte Luftfahrzeuge (UAVs), militärische elektronische Ausrüstung, Satelliten und andere bemannte oder unbemannte Raumfahrzeuge oder andere Anwendungen, bei denen wiederaufladbare RFBs vorteilhaft eingesetzt werden können.

12. Verfahren zur Speicherung elektrischer Energie, das Folgendes umfasst:

   a) Laden der RFB nach einem der Ansprüche 1 bis 8 durch Anlegen einer Stromquelle an die positive und negative Elektrode,
   b) Entladen der RFB durch Anschluss der positiven und negativen Elektrode an eine Last.

13. Verfahren zur Speicherung elektrischer Energie nach Anspruch 12, wobei das während des Ladens der Batterie an die positive Halbzelle angelegte Potential im Wesentlichen nicht mehr als 1,5 V gegenüber Ag/AgCl, vorzugsweise nicht mehr als 1,45 V gegenüber Ag/AgCl und am meisten bevorzugt nicht mehr als 1,4 V gegenüber Ag/AgCl beträgt.

**Revendications**

1. Batterie à reflux redox (RFB) rechargeable comprenant une cellule électrochimique comprenant au moins une électrode positive dans une demi-cellule positive et une électrode négative dans une demi-cellule négative, une membrane conductrice ionique entre les deux demi-cellules, en ce que la membrane est conçue pour un double anolyte et catholyte acides ou conçue pour un catholyte acide et un anolyte alcalin ; au moins deux réservoirs de stockage pour le catholyte et l'anolyte, éventuellement une ou plusieurs pompes pour faire circuler le catholyte et l'anolyte stockés à travers les demi-cellules cathodiques et anodiques et respectivement au moins un anolyte et au moins un catholyte ;

   en ce que l'anolyte comprend au moins un combustible capable d'oxydation réversible, et un couple redox $Zn^{2+}/Zn^0$ et $In^{3+}$, au moins un électrolyte pour la conductivité et au moins un solvant ; et le catholyte comprend un couple redox $Cr^{III}/Cr^{VI}$, au moins un acide fort, un couple redox $Ce^{4+}/Ce^{3+}$ et au moins un solvant,
   en ce que l'électrode positive est en carbone,
   en ce que la quantité molaire de In par rapport à Zn dans l'anolyte et l'anode est inférieure à 50 mol %, de préférence inférieure à 15 mol %, de manière plus préférentielle inférieure à 5 mol % et le plus préférablement pas plus de 1 mol %.

**2.** RFB selon la revendication 1, en ce que l'acide fort est sélectionné dans le groupe constitué d'acide méthane sulfonique, de $HNO_3$, $H_2SO_4$, $HClO_4$, $H_3PO_4$, ou des mélanges de ceux-ci, de préférence d'acide méthane sulfonique.

**3.** RFB selon la revendication 1 ou 2, en ce que l'électrode positive est fabriquée à partir de noir de carbone, de feutre de carbone, de graphite, de carbone et de feutre de graphite, de flocons de carbone, de papier de carbone, de fibre de carbone, de nanotubes de carbone, de nanofibres de carbone, de graphène et/ou de carbone vitreux, de préférence à partir de feutre de carbone, de carbone et de feutre de graphique, et/ou de noir de carbone, plus préférablement de carbone et/ou de feutre de graphite.

**4.** RFB selon l'une des revendications 1 à 3, en ce que le carbone de l'électrode positive comprend des métaux catalytiquement actifs sélectionnés dans le groupe constitué de Pd, Ag, Pt, Ni, Ir, Ru, Rh, Au, a été dopé à l'azote et/ou a été activé par exemple par traitement thermique, traitement acide, traitement au peroxyde d'hydrogène et/ou traitement au plasma.

**5.** RFB selon l'une des revendications 1 à 4, en ce que l'anolyte comprend le couple redox $Zn^{2+}/Zn^0$, au moins de l'acide méthane sulfonique et/ou son anion en tant qu'électrolyte pour la conductivité et au moins un solvant.

**6.** RFB selon l'une des revendications 1 à 5, en ce que $Zn^{2+}/Zn^0$ est utilisé sous forme de méthanesulfonate de zinc (II), le couple redox $Cr^{III}/Cr^{VI}$ est utilisé sous forme de méthanesulfonate de chrome (III) et $Ce^{3+}$ dans le couple redox $Ce^{4+}/Ce^{3+}$ est utilisé sous forme de méthanesulfonate de cérium (III).

**7.** RFB selon l'une des revendications 1 à 6, en ce que l'électrode négative contient de l'$In^0$.

**8.** RFB selon l'une des revendications 1 à 7 qui comprend en outre un recombineur $H_2$.

**9.** Procédé de fonctionnement d'une RFB selon l'une des revendications 1 à 8, en ce que le potentiel appliqué à la demi-cellule positive pendant la charge de la batterie n'est en principe pas supérieur à 1,5 V vs. Ag/AgC1, de préférence pas supérieur à 1,45 V vs. Ag/AgC1 et plus préférablement pas supérieur à 1,4 V vs. Ag/AgC1.

**10.** Procédé de fonctionnement d'une RFB selon l'une des revendications 1 à 8, en ce que le programme potentiel suivant est appliqué à la demi-cellule négative :

a) un premier potentiel de -1,5 (+/-0,1) V vs Ag/AgC1 est appliqué pendant une période plus courte que les étapes b) et c) suivantes pour déposer rapidement du Zn-In,
b) un potentiel de -1,1 V (+/-0,1 V) est appliqué pour déposer plus de Zn-In,
c) un potentiel de -0,7 V (+/-0,1 V) est appliqué jusqu'à ce que le courant d'oxydation diminue considérablement,
d) un potentiel de 0 à -0,3 V est appliqué pendant une période plus courte qu'aux étapes b) et c) pour éliminer des couches In qui protègent Zn.

**11.** Utilisation de la RFB selon l'une des revendications 1 à 8 pour stocker l'énergie électrique en vue d'un stockage d'énergie à niveau du réseau, le stockage d'énergie pour les propriétaires, les emplacements distants, la stabilisation ou équilibrage de la charge des sites de production d'électricité renouvelable intermittente, de préférence les parcs éoliens et solaires, les microcentrales hydroélectriques, l'énergie géothermique, l'énergie marémotrice, l'arbitrage énergétique, les appareils électroniques portables et/ou personnels, les véhicules électriques tels que navires, sous-marins, avions, véhicules sous-marins sans pilote (UUV) ou véhicules aériens sans pilote (UAV), les équipements électroniques militaires, les satellites et autres véhicules spatiaux habités ou non habités, ou autres applications où les RFB rechargeables peuvent être utilisées de manière avantageuse.

**12.** Procédé de stockage d'énergie électrique comprenant :

a) la charge de la RFB selon l'une des revendications 1 à 8 en fournissant une source d'alimentation électrique aux électrodes positive et négative,
b) la décharge de la RFB en connectant les électrodes positive et négative à une charge.

**13.** Procédé de stockage d'énergie électrique selon la revendication 12, en ce que le potentiel appliqué à la demi-cellule positive pendant la charge de la batterie n'est en principe pas supérieur à 1,5 V vs. Ag/AgC1, de préférence pas supérieur à 1,45 V vs. Ag/AgC1 et le plus préférablement pas supérieur à 1,4 V vs. Ag/AgC1.

Fig. 1:

Fig. 2a)

Fig. 2b)

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016202950 A
- US 6986966 B2
- US 7214443 B2
- US 7270911 B2
- US 7252905 B2
- US 7033696 B2

**Non-patent literature cited in the description**

- **WHILE NIKIFORIDIS et al.** *Journal of Power Sources*, 2013, vol. 243, 691-698
- *Electrochimica Acta*, 2014, vol. 115, 621-629
- **NIKIFORIDIS et al.** *Electrochimica Acta*, 2015, vol. 157, 274-281
- **BARD** ; **FAULKNER**. Electrochemical Methods: Fundamentals and Applications. 2001
- **WEBER, A.Z** ; **MENCH, M.M.** ; **MEYERS, J.P. et al.** *J. Appl. Electrochem.*, 2011, vol. 41, 1137-1164